(19) Europäisches Patentamt / European Patent Office / Office européen des brevets

(11) **EP 3 518 160 A1**

(12) **EUROPEAN PATENT APPLICATION**

(43) Date of publication:
**31.07.2019 Bulletin 2019/31**

(51) Int Cl.:
**G06Q 10/08** *(2012.01)*     **G06Q 10/04** *(2012.01)*

(21) Application number: **19158652.8**

(22) Date of filing: **28.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**12832736.8 / 2 926 303**

(71) Applicant: **Saint-Gobain Glass France
92400 Courbevoie (FR)**

(72) Inventors:
• **VILAIN, Laurent
92290 CHATENAY-MALABRY (FR)**

• **BILLERT, Ulrich
78170 LA CELLE SAINT-CLOUD (FR)**
• **PEYRUDE, Antoine
75014 PARIS (FR)**

(74) Representative: **Saint-Gobain Recherche
B.P. 135
39, quai Lucien Lefranc
93303 Aubervilliers Cedex (FR)**

Remarks:
This application was filed on 21-02-2019 as a divisional application to the application mentioned under INID code 62.

(54) **METHOD AND SYSTEM FOR IDENTIFYING DEFECTS IN GLASS**

(57) A method and system for identifying defects in glass and generating an optimized cutting layout are provided. The method includes detecting the presence of defects in the sheets of glass by inspecting the sheets of glass or a glass ribbon before it is cut into said sheets of glass; identifying, using an identifier device, each of a plurality of sheets of glass (8) with an identifier (12); determining a severity criterion for each of said defects; generating, using a mapping device (6), a map of glass attributes for each of the plurality of sheets of glass (8), the attributes of a glass sheet comprising the position of the defects present in said glass sheet and the severity criterion of said defects; associating, using a computer system (21), the map of attributes of each of the plurality of sheets of glass (8) with the identifier (12) of a corresponding each of the plurality of sheets of glass; storing the map of glass attributes of each of the sheets of glass in a database (10); providing a customer with a level of access to information in the database (10) so as to allow the customer to retrieve at least part of the map of attributes of sheets of glass acquired by the customer, and generating, using a computer system, an optimized cutting layout for a glass sheet based on said at least part of the map of attributes.

Fig.1

**Description**

FIELD

The present invention relates to glass manufacturing method and systems, and more particularly to a method and system to reduce the quality related losses in glass at a customer by adequately leveraging sheet-specific information from the float supplier.

BACKGROUND

Glass can be manufactured as a continuous ribbon, for example, a continuous ribbon of float glass or cast glass. The ribbon can then be cut into glass sheets termed "motherglass" or large format glass plates or sheets. Typically, these glass sheets have dimensions of 3.21m by about 6m, or dimensions of 2.55m by 3.21m. However, sheets with other dimensions can also be manufactured.

The quality specification defines the properties, attributes and the criteria tolerance limits for all standard glass product families delivered by the flat and/or processed glass producer to its customer(s). In some instances, there might be a gap between the tolerance limits supplied with the glass material and the quality standards required by the customer, hence inducing potential glass losses hereinafter referred to as "non-quality losses" or defects.

Generally, before cutting, the glass ribbon is analyzed or scanned for the presence of any defects to verify whether the glass ribbon corresponds to specifications. For example, if there are out-of-specification defects, the glass sheets are cut so as to exclude a portion or portions of the glass ribbon having the defect(s) that are out-of-specification. Alternatively, the defects can be for example marked with an ink so that they can be identified subsequently without performing another analysis. After cutting, the glass sheets can be stacked in different piles according to the classes of specifications of the defects.

The glass sheets can then undergo one or more conversion processes such as, deposition of a layer, lamination, etc. After each conversion, the glass sheets are further analyzed to detect the presence of other defects to verify whether the quality of the glass sheets corresponds to a predetermined specification.

SUMMARY

According to an aspect of the present invention there is provided a method for generating a cutting layout for a glass sheet according to Claim 1.

According to another aspect of the present invention there is provided a system for generating a cutting layout for a glass sheet according to Claim 22.

According to yet another aspect of the present disclosure there is provided a method of generating a cutting layout for a glass sheet. The method includes accessing, by a computer system associated with a second manufacturer, an amount of information in a database associated with a first manufacturer, the database having stored therein attributes of the glass sheet including a position of one or more defects within the glass sheet, wherein the amount of information accessed is set, by a computer system associated with the first manufacturer, according to a premium or fee paid by the second manufacturer to the first manufacturer. The method further includes processing, by the computer system associated with the second manufacturer, the amount of information to provide an optimized cutting procedure for producing a desired cutting layout.

These and other objects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In an embodiment of the invention, the structural components illustrated herein are drawn to scale. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

BRIEF DESCRIPTION OF THE DRAWINGS

In the accompanying drawings:

FIG. 1 is a schematic diagram of a glass manufacturing process, according to an embodiment of the present invention;

FIG. 2 is schematic diagram showing an example of providing specific sub-databases to specific customers, according to an embodiment of the present invention;

FIG. 3 illustrates an example of a glass sheet for which various defects may cataloged;

FIG. 4 depicts the shape of the glass pieces to be cut in a cutting layout, according to an embodiment of the present invention;

FIG. 5 depicts glass pieces to be cut can have any desired shape such as a polygon, or any other more complex shape, according to various embodiments of the present invention.

FIG. 6A illustrates an example of an optimum cutting layout in which the defects may be considered acceptable for the pieces of glass and defects which may not be acceptable for any of the glass pieces to be cut, according to an embodiment of the present invention;

FIG. 6B depicts the various defects within acceptance zones (e.g., rectangles) that are positioned within each other (concentric) inside the glass piece or primitive to be cut, according to an embodiment of the present invention; and

FIG. 7 depicts a flow chart of a method for identifying defects in glass, according to an embodiment of the present invention.

DETAILED DESCRIPTION

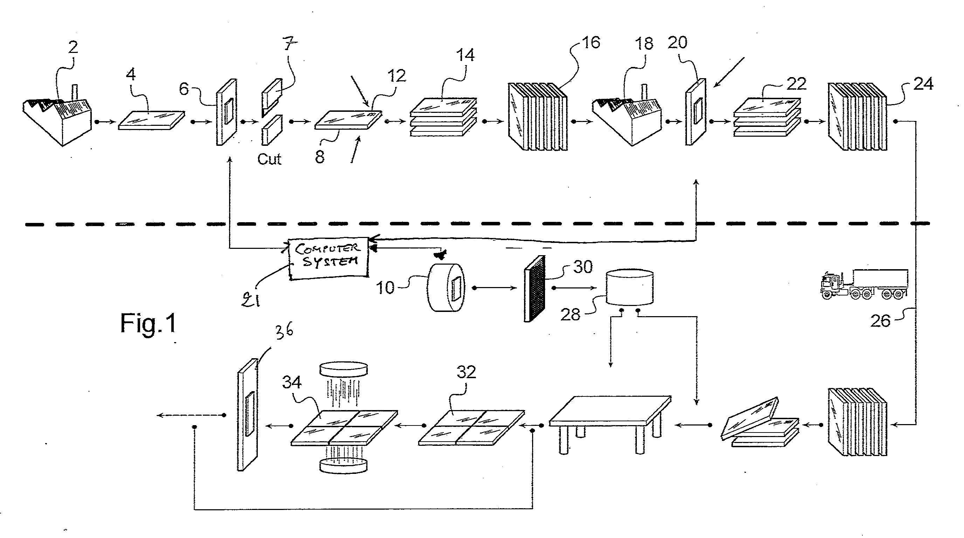

FIG. 1 is a schematic diagram of a glass manufacturing process, according to an embodiment of the present invention. The upper part of the diagram above the dashed line show the various steps of manufacturing sheets of glass at a first glass manufacturer (e.g., SAINT GOBAIN GLASS) location. The bottom part of the diagram below the dashed line show the steps of manufacturing a glass product (e.g., a glass for automobile application, glass for building application, glass for photovoltaic application, glass for OLED application, mirror or window, etc.) at a second manufacturer location which is a customer of the first glass manufacturer. This is not limiting. It will be appreciated that fewer or additional steps could be performed at the first and/or second locations in other embodiments of the invention. Furthermore, although the various manufacturing steps are shown implemented in one location of the first glass manufacturer, it will be appreciated that the one or more manufacturing steps can be implemented in one or more locations of the first glass manufacturer or by one or more sister/affiliate companies of the first glass manufacturer. Similarly, although the various manufacturing steps are shown implemented in one location of the second glass manufacturer (glass converter or transformer), it will be appreciated that the one or more manufacturing steps can be implemented in one or more locations of the second glass manufacturer or by one or more sister/affiliate companies of the second glass manufacturer. Furthermore, although the customer is described as being a second glass manufacturer (a glass converter) different from the first glass manufacturer, it will be appreciated that the second glass manufacturer or customer can be a division or subentity or affiliate of the first manufacturer.

As shown in FIG. 1, the first manufacturer produces a so-called "float glass" or a continuous ribbon of glass 4 in a factory 2. The glass ribbon 4 is analyzed or inspected for the presence of any defects using a detection device 6 (e.g., a scanner). In addition, attributes of the glass ribbon 4 are also mapped and stored in database 10. The attributes may include, for example, thickness of the glass, type of glass, date of manufacture, time of manufacture, place of manufacture, serial number of machine of manufacture, number of defects, position of a defect, type of defects, density of defects, a severity criterion of a defect, or any combination thereof. This is not limiting. It will be appreciated that other attributes of the glass ribbon 4 could be stored in the database 10. Moreover, it will be appreciated that the database 10 can be centralized or distributed and can include one or more sub-databases. The sub databases may be all connected to a main database and/or may be interconnected using various known communication links. The database 10 and/or sub-databases can take various forms. For example, the database and/or sub-databases can each take the form of a portable storage unit (e.g. disk and/or CD-ROM). The term "defect" is used herein broadly to include any attribute of the glass sheet including, but not limited to, an imperfection or flaw in the glass sheet. It will be appreciated that a glass imperfection that may not be acceptable in an embodiment may be considered as acceptable in another embodiment.

After inspection for the presence of defects, the glass ribbon 4 is cut into glass sheets (motherglass) 8 using a cutting device 7. Areas of the glass ribbon 4 that exhibit defects that are determined to be not acceptable or outside the norms or specifications can be eliminated during the cutting phase. For example, areas of the glass ribbon 4 that have defects can be cut out as scrap glass while areas of the glass ribbon that are substantially free of defects are cut into glass sheets 8.

A mapping device, including the detection device 6, can be used to generate the map of attributes, for example by scanning the glass ribbon 4 and recording a position and type of each defect that may be present in the glass ribbon 4 in the database 10 that is maintained in a storage device. A severity criterion is also recorded in the database 10. In an embodiment, the severity criterion is a qualitative parameter that is implemented by the first manufacturer to provide the degree of severity of a defect in the glass. For example, the severity criterion can be expressed as a distance between adjacent defects being smaller than a set threshold, the threshold being selected by the manufacturer (the first manufacturer) or by the customer of the first manufacturer (the second manufacturer) or by a third independent party. Another severity criterion can be, for example, a size of a defect taken along with a density of defects with a glass sheet. In this case, the severity criterion threshold for sending a sheet of glass to a customer for further processing can be a size of a glass defect of about 5 millimeters with a density of approximately 0.6 defects per glass sheet or a size of glass defect of about 3 millimeters with a density of approximately 1 defect per glass sheet. It will be appreciated that the severity criterion threshold can be set by the manufacturer of glass (first glass manufacturer) or provided as a specification by the customer (the second glass manufacturer) or by a third party independent from the first manufacturer or the second manufacture, for example the ultimate customer (e.g., the manufacturer of automobiles if the glass is intended for car windows for example, or the manufacturer of house/building windows, or any other manufacturers of products including glass).

Information with regards to the defects relating to each motherglass is stored in the database 10. An identifier 12, for example a bar code, an RFID chip, or another identifier is used to identify each glass sheet. The marking of the identifier is for example carried out with ink or by laser. Alternatively, any other types of identifier device can be used to mark or identify the glass sheet in other embodiments of the invention. In an embodiment, the identifier may include a unique one-dimensional barcode, a unique two dimensional barcode, or a unique data matrix, etc. The map of attributes of each glass sheet stored in database 10 is associated to the identifier on each glass sheet. The association can be done using a computer system 21 that is, for example, in communication with the mapping device (e.g. the scanner) and the database 10.

The identifier (e.g. a plate identifier) may be read on the production line of the float glass producer. In an embodiment, the identifier code quality is benchmarked with a standard defined by the float glass supplier to ensure the plate identification will be done at customer place where external conditions might be different (e.g. various and diverse) from the production site.

It will be appreciated that the map of attributes can take various forms and broadly refers to a file (including one or more sub-files), for example an electronic file, that includes the position and type of each defect in/on the glass sheet, and/or the severity criterion. The map of attributes can also include additional information, such as for example, information about the glass sheet (e.g. composition of the glass, date of manufacture,...). The map of attributes may be in the form of a table or may be a graphical representation of the defects in/on the glass sheet.

In an embodiment, the attributes of each sheet including the position of the defects, and the severity criterion of the defect in the glass sheets can be stored in database 10 within a storage medium such as a hard drive or a storage server, etc. For example, the database 10 can be part of the computer system 21. However, alternatively or in addition, the attributes can also be stored in an electronic memory, etc. In an embodiment, the storage medium including, the hard drive, the storage server, the electronic memory, etc., can be read using a computer in communication with the database 10 through a communication link. The communication link can be established via a direct wire, the internet ("the cloud") or any wireless network such as a cellular network.

The obtained glass sheets 8 are then arranged as a stack of glass sheets 14. The stacks of sheets 14 can be stored as pallets of glass sheets 16 and transported to processing unit 18 for further processing. The processing unit 18 can be arranged at a different location than the factory 2. In an embodiment, in processing unit 18, the glass sheets 16 are further processed by depositing a coating using a "coater." For example, at least one conducting or dielectric coating can be deposited on one or more of the glass sheets.

After further processing at processing unit 18, the glass sheets 16 can be further analyzed or inspected by a second detection device (e.g., scanner) 20. In an embodiment, the second detection device 20 is part of the mapping device. The analysis of the glass sheets 16 by device 20 allow detecting any additional defects that may have been generated during the processing at processing unit 18 (e.g., generated during the coating process).

In addition to being able to analyze the glass sheets 8 in glass pile 16 for further defects, the detection device 20 can further read the unique identifier on each of glass sheets 8. By identifying each glass sheet 8 in the stack or pile of glass sheets 16, any additional defects detected by device 20 can be linked to the identifier associated with the sheet and added to the other defects of the corresponding glass sheet uncovered before processing at processing unit 18. Therefore, in an embodiment, the database 10 is updated using the computer system 21 with information regarding any additional defect(s) pertaining to each of the glass sheets.

In a case where the defects are marked using ink or laser etching, instead of, or in addition to, using a scanner, the detection device may comprise a camera for detecting the position of ink spots or laser etched markings, etc. As stated above, in an embodiment, the database can be stored in a hard drive, a storage server or an electronic memory, or any combination thereof. In another embodiment, the database 10 can be stored in a removable memory medium provided or linked to the detection device 20.

After processing the glass sheets 8 in glass pile 16 at processing unit (e.g., coating unit) 18 and analyzing the glass sheets 8 in glass pile 16 using detection device 20, the glass sheets 8 are stacked again as stack 22 and stored in warehouse 24. The warehouse 24 can be at a different location than, or at the same location as, that of the processing unit 18. In an embodiment, the glass sheets 8 can be arranged and stored on the basis of the information of the defects present in the glass sheets 8.

The stacked and stored glass sheets 8 can then be transported (e.g., using trucks or trains, or any other means of transportation) 26 to the customer, i.e., the second glass manufacturer. The customer receives the stack 22 of glass sheets 8 from warehouse 24 and further processes the glass sheets to produce glass products. For example, the customer may cut the glass sheets 8 into several pieces of desired shapes or dimensions. The cut glass pieces can have the same shape or different shapes. Similarly, the cut glass pieces can have the same dimension or different dimensions, etc.

At the customer side, a computer system 28 can be used to define the cutting contours of the glass pieces. The computer system 28 can run a program that provides optimum cutting to produce desired glass pieces while minimizing the amount of glass that is rejected and recycled due to the presence of defects that are out of the specifications which are, for example, set by the second manufacturer or the ultimate customer (e.g., the automobile manufacturer or window manufacturer, etc.). The program can be embodied in a machine readable medium encoded with instructions for performing the cutting procedure.

The customer or second manufacturer uses a reader to read the identifier 12. By reading the identifier 12, the customer can access the database 10 to retrieve some information pertaining to the attributes of the glass sheet 8 which are associated with the identifier 12. In an embodiment, the computer system 28 is configured to access the database 10 to retrieve some information pertaining to the attributes of the glass sheet 8 having the identifier 12 that is read by the reader. The attributes include, among other parameters, the position of the defect, and the severity criterion. In an embodiment, the computer system 28 can access the database 10 through a network such as the internet or through a dedicated communication line, or wireless communication (e.g., cellular communication).

In an embodiment, some information pertaining to the attributes of the glass sheet is filtered using a filter 30. It will be appreciated that the filter 30 may be a computer program that is executable by the computer system 21, for example by a processor of the computer system 21. The filter 30 may reside in the computer system 21 in an embodiment of the invention. Alternatively, the filter 30 may be separate from the computer system 21. Because of the filter 30, the customer does not have access to the full database but only to a selected portion of the database containing the attributes of the glass sheets 8. The amount of information that the customer can have access to is controlled by the first manufacturer using filter 30. For example, the amount or level of information that can be accessed by the second manufacturer or customer can be set by the first manufacturer according to an amount of funds or a fee or premium that the customer pays to the first manufacturer. For example, the first manufacturer can set a plurality of levels of access such as three levels of access, a higher level, a medium level and a lower level (e.g., referred to as platinum, gold and silver in an embodiment) with the higher level (e.g., platinum) providing access to the largest amount of information in the database and with the lower level (e.g., silver) providing access to the least amount of information in the database. For example, the customer can purchase rights to access the highest level (e.g., platinum) by paying a higher premium. On the other hand, the customer can also purchase rights to access only the lower level (e.g., silver) by paying a lesser premium. Although three levels are discussed herein, it will be appreciated that any number of levels of access can be provided in other embodiments of the invention.

In an embodiment, a level of access to the database 10 is provided to the customer so as to allow the customer to retrieve at least part of the map of attributes of each sheet in the stack of sheets. Specifically, in an embodiment, the computer system 28 includes a computer product, for example a machine readable medium, that is encoded with machine readable instructions so that the map of attributes can only be used by the computer system 28 to provide an optimized cutting procedure for producing desired glass pieces. However, the machine readable instructions prevent the user of the computer system 28 from retrieving, recording and/or displaying the maps of attributes or attributes accessed by the computer system 28. In that way, the customer is prevented from collecting defect information on the glass sheets to perform data mining or statistical analysis.

Depending on the level of access, the customer is provided with larger or smaller portion of the information stored in the database 10. In an embodiment, the first manufacturer builds a specific sub-database from database 10 that can be accessed by the intended customer according to the level of access acquired by the customer by paying a certain premium or fee. The sub-database contains filtered information using filter 30. Hence, the filter 30 can be set by the first manufacturer to deliver the sub-database according to the level of access acquired by the customer.

In this embodiment, the data in database 10 may not be encrypted as the customer does not have direct access to database 10. Indeed, the customer can only have access and read data stored in sub-database which is customized according to the level of access acquired by the customer by paying a certain premium. Therefore, the customer is not able to read the entire data or information stored in database 10 but can simply read the data or information stored in the sub-database which is intended or delivered to, or accessed by, the customer.

In another embodiment, the customer can be provided with an access to the database 10. In this case, the data in database 10 is encrypted. Encryption of the database can be carried out using any known appropriate encryption algorithms. For example, encryption can be carried out using one or more processors of the computer system 21. The customer is provided with a specific key to read specific data stored in database 10. The key allows the customer to "unlock" and read data that is intended to only the customer. The key does not enable the customer to read other data stored in the database that is not intended to the customer. In other words, the access to data within database 10 is limited according to a desired access level acquired by the customer by paying a premium.

The key may be a password or other types of identifier provided to the customer or a computer program (or a link to a computer program) that allows the customer (e.g., the computer system 28 that is designed to perform the cutting procedure) to access data in the database 10.

In this alternative embodiment, the computer system 28 may also include a computer product, for example a machine readable medium, that is encoded with machine readable instructions so that the map of attributes can only be used by the computer system 28 to provide an optimized cutting procedure for producing desired glass pieces. However, the machine readable instructions prevent the user of the computer system 28 from retrieving, recording and/or displaying the maps of attributes or attributes accessed by the computer system 28. In that way, the customer is prevented from collecting defect information on the glass sheets to perform data mining or statistical analysis.

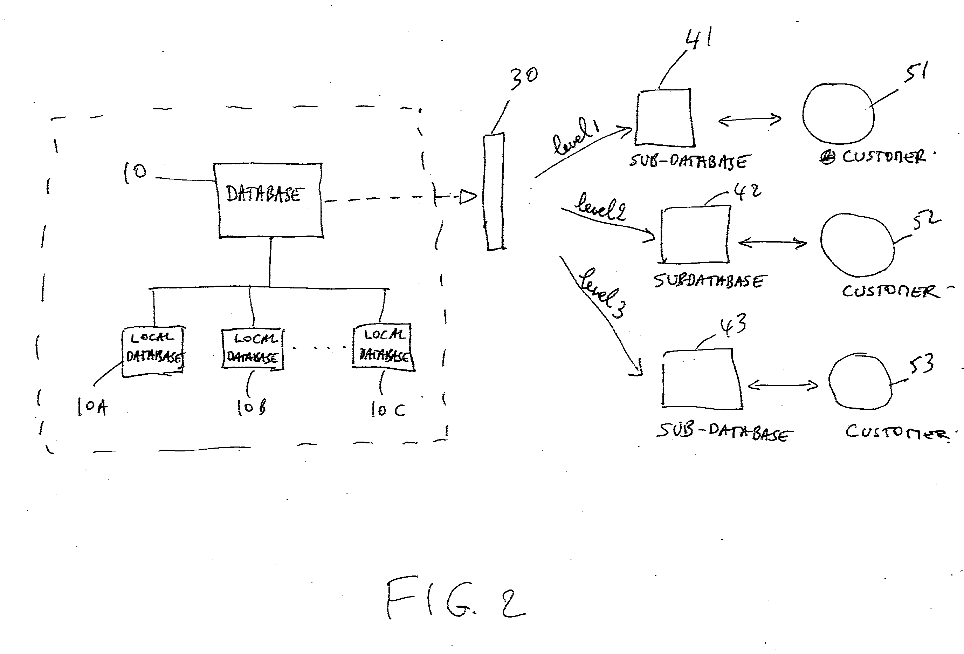

FIG. 2 is schematic diagram showing an example of providing specific sub-databases to specific customers, according to an embodiment of the present invention. The attributes of the glass sheets 8 are stored in database 10. In an embodiment the database 10 may include a plurality of local databases 10A, 10B and 10C, for example from different plants of the first manufacturer. In another embodiment, the database 10 may be configured to communicate to local databases 10A, 10B and 10C to retrieve data stored therein. For example, the database 10 can reside in a storage server that is configured to access the plurality of local databases and retrieve the data attributes stored therein. A filter 30 can be used by the first manufacturer to provide a plurality of sub-databases 41, 42 and 43 from database 10. The sub-database 41 can only be accessed by the intended customer 51, the sub-database 42 can only be accessed by the intended customer 52, and the sub-database 43 can only be accessed by the intended customer 53. Filter 30 can be set according to the level of access to data acquired by each of the customers 51, 52 and 53. For example, the filter 30 can be set to level 1 to provide sub-database 41 containing level 1 data (e.g., silver), the filter 30 can be set to level 2 to provide sub-database 42 containing level 2 data (e.g., gold), and the filter 30 can be set to level 3 to provide sub-database 43 containing level 3 data (e.g., platinum). For example level 1 (e.g., silver) can generate sub-database 41 that contains a first limited portion of data concerning the attributes. For example at level 1, the sub-database 41 may only contain the position of the defects and not the characteristics of the defects such as the size or shape of the defect. For example at level 2, the sub-database 42 may contain, in addition to the position of the defects, the size of the defects and the shape of the defects. For example at level 3, the sub-database 43 may contain in addition to the position of the defects, the size and the shape of the defects, the severity criterion, etc. Therefore, the level 3 is a higher access level providing access to more information and data within database 10.

In an embodiment, the sub-databases 41, 42 and 43 can be encrypted so as to prevent respective customers 51, 52 and 53 from being able to perform statistical analysis on the data stored in databases 41, 42 and 43. For example, customer 51 may be able to read data stored in database 41 to the extent that the data stored in database 41 is only used for cutting purposes and not to perform analysis of the data stored in sub-database 41 to perform statistical analysis and extract statistical information on the attributes (e.g., defects) within the glass sheets 8. For example, the customer's computer system may include a computer product, for example a machine readable medium, encoded with machine executable instructions that enables the customer to read data stored in database (e.g. 41, 42, 43) to provide an optimized cutting procedure but prevents the user of the computer system 28 from retrieving, recording and/or displaying the maps of attributes.

In an embodiment, optimization of the cutting or generation of a cutting layout is performed based on the data stored in the database, the data including attributes of each glass sheet to be cut. Generating the cutting layout can be performed either by the first manufacturer or by the customer or second manufacturer or yet by a third party independent from the first manufacturer and the second manufacturer. In an embodiment, the third party can be, for example, a company that produces the cutting devices or tools to cut the glass sheets.

In the case where the optimization or the generation of the cutting layout is performed at the first manufacturer side, since the first manufacturer has full access to the database 10 there is no need to encrypt the database. In this scenario, the first manufacturer may receive a specification (dimension, shape, etc.) of the pieces of glass that need to be manufactured from the second manufacturer. The first manufacturer can use the shape and the dimension as constraints and also use the attributes of the glass sheet including the position of any defects, etc. to generate the layout and cut the pieces according to the layout or send the layout as a file to the customer so that the customer can perform the cutting.

In the case, however, the generation of the cutting layout is performed either at the second manufacturer side or at the third party side, the database 10 is encrypted to ensure that the data stored in the database 10 is not accessed or that only data paid for by the customer (second manufacturer) or third party is provided to the customer (second manufacturer) or third party. In this scenario, the first manufacturer simply provides the attributes purchased by the customer to the customer or third party entity which in turn uses the data to generate the cutting layout.

In an embodiment, the program for defining a layout for cutting the glass sheets 8 according to a position of the defects in the glass sheets 8 can be implemented at the first manufacturer side, at the customer side, or at a third party side. For example, the program may be implemented in the computer system 28 at the customer side. The program for cutting glass sheets 8 according to an embodiment of the invention is described in greater detail in the following paragraphs.

After generating an optimum cutting layout has been carried out, the glass sheets are cut 32 according to the cutting layout that the computer 28 has selected for each glass sheet 8. In an embodiment, the glass pieces that are obtaining after cutting glass sheets 8, pieces can be washed using washer 34. The washed cut glass pieces can be optionally analyzed by a third detection device 36 and then sent for assembly, for example, to be mounted as automobile windows or windshields, or as windowpanes in a building, etc. In an automobile windshield, two cut pieces of glass are bent and laminated while depositing a thermoplastic interlayer for example of PVB type between the two pieces of glass.

In an embodiment, the cutting layout is generated in a dynamic manner for each of the glass sheets based on the information relating to the defects stored in the database 10. In an embodiment, the cutting layout can be obtained by using linear optimization.

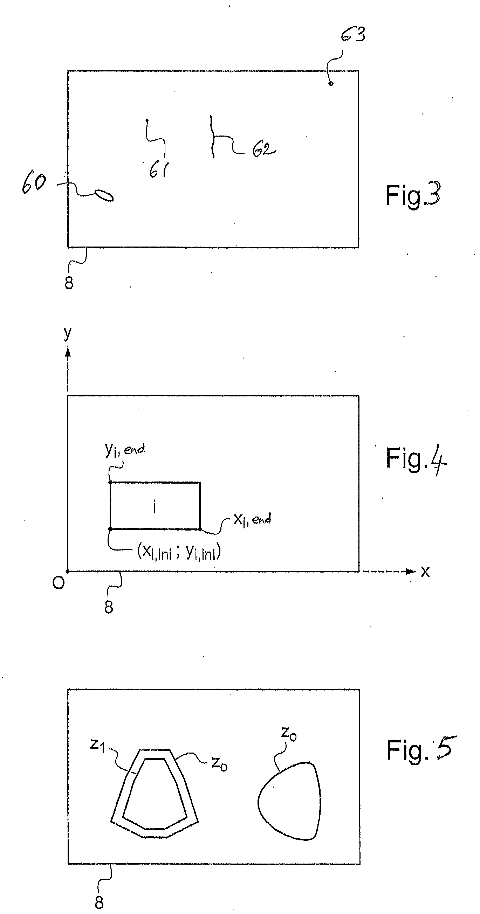

FIG. 3 illustrates an example of glass sheet 8 for which various defects have been cataloged. For example, the defects may include various types such as a "pinhole" defect on the coating 61, a bubble defect 60, a scratch defect 62 on the glass, a surface defect 63. For example, an optimum cutting layout for a single glass sheet can be generated so as to obtain pieces of glass of identical size. For example, the glass sheet has defects of a single type and of a single size and which are not acceptable in the pieces of glass to be cut (or "primitives").

In this example the layout is generated by a linear optimization. Specifically, the cutting layout is generated by iteratively solving an optimization problem for a linear function on a convex polyhedron representing constraints on the variables, the constraints being linear equations. Although linear optimization is used in this example, other types of optimization methods can be used. One benefit of using a linear optimization is its speed of computation.

In an embodiment, the goal of using a linear function is to minimize the function representative of the number of primitives including at least one defect. In another embodiment, the function provides a value representative of the number of pieces of glass in the cutting layout and/or of a sum of one or more dimensions of the cut pieces of glass, a total surface area of the cut pieces of glass, or a sum of retail costs of the cut pieces of glass, etc.

For example, in an embodiment, the shape of the glass pieces to be cut in the cutting layout also referred to as "primitives" in the industry, can be rectangles, as shown in FIG. 4. However, as it can be appreciated, the glass pieces to be cut can have any desired shape such as a polygon, a circle, an ellipse, or any other more complex shape, as shown in FIG. 5. For example, while the general shape of the glass pieces to be cut can be polygonal, the pieces may have rounded or curved edges, as shown in FIG. 5.

For each primitive (e.g., having a rectangular shape), two variables and two parameters are used to define the position of the primitive within the motherglass or glass sheet 8. In the present example, the rectangles have the same orientation where the length of the rectangle is parallel to the length of the motherglass or glass sheet 8.

In an embodiment, as shown in FIG. 4, the abscissa $x_{i,ini}$ and ordinate $y_{i,ini}$ of the lower left corner of each primitive i can be selected as variables to represent the position of each primitive rectangle within the motherglass 8. In another embodiment, another point of the primitive can be selected as the variable to represent the position of the primitive within the motherglass 8. In yet another embodiment, other variables may be used, such as an angle of the primitive with respect to a reference, so as to be able to rotate the primitive during optimization.

The length and the width of the rectangle can be computed based on the coordinates of the lower left corner of the piece to be cut, the ordinate $y_{i,end}$ of the upper left corner and the abscissa $x_{i,end}$ of the lower right corner. However, any suitable basis can be used to calculate the length and width of the rectangle such as the orientation.

In an embodiment, a constraint of intersection of two primitives can be added. In this example, the constraint "Intersection (i, j)" of two primitives is equal to 1 if two primitives overlap and equal to 0 if not. These values can be stored in a "n by n" matrix, where n is an integer number corresponding to the number of primitives desired to be cut from the sheet.

In an embodiment, intersection(i, j) has 4 constraints. The four constraints can be expressed mathematically as:

$$X_{i,ini} \geq X_{j,end} \qquad y_{i,ini} \geq y_{j,end}$$

$$X_{j,ini} \geq X_{i,end} \qquad y_{j,ini} \geq y_{i,end}$$

at least one of the four constraints must be satisfied in order that the constraint Intersection (i,j) be equal to 0.

In an embodiment, the value of the function is computed by creating a matrix of n rows and m columns, where m is an integer number corresponding to the number of defects, and where n is an integer number corresponding to the number of primitives. In an embodiment, each defect is defined by a rectangle whose positioning is defined for example in the same manner as the primitives, namely with $x_{i,ini}$, $y_{i,ini}$, $x_{j,end}$ and $y_{j,end}$. However, similar to the primitives, the rectangle defining the defect can be of any shape such as, for example, a polygon.

A function Defect (i,j) = 1 in the case of intersection of the primitive rectangle i with the defect rectangle j and equal to 0 in the converse case by satisfaction of at least one of the four inequalities mentioned hereinabove for the constraint Intersection().

Defect (i,j) is not a constraint but a value that is used in the computation of the objective function to be maximized. In an embodiment, the computer computes $\sum_{j} Defect(i,j)$ for each primitive I, where j represents the defect and i the primitive. A table of size n is created with the values IsGood(i).

$$\text{IsGood(i)}=0 \text{ if } \sum_{j} Defect(i,j) \geq 1,$$

and

$$\text{IsGood(i)}=1 \text{ if } \sum_{j} Defect(i,j) = 0.$$

The objective $\text{function} = \sum_{i} IsGood(i)$ is the function that is to be maximized.

To implement this program, a linear solver using a simplex algorithm can be used. Initially an initial cutting layout is recorded in memory. Iterations are carried out on the basis of this initial cutting layout, for which the function to be optimized is computed during a first initialization step. As it can be appreciated, linear programming is merely one possibility among other programming techniques for generating an optimum cutting layout by dynamic computation. The dynamic computation can maximize or minimize a function of several variables, the variables being subject to constraints. However, the function and the equations from the constraints may not be linear.

In another embodiment, the primitives 8 may be of various sizes and/or having various orientations. In an embodiment, for primitives having rectangular shapes, the length and the width can also be used, in addition to the coordinates ($x_{i,ini}$, $y_{i,ini}$) of the lower left corner, as variables so as to determine the size, and the angle of orientation of the rectangular shapes.

An optimum cutting layout can also be generated by positioning various primitives on various glass sheets. The glass sheets 8 are for example considered to be contiguous and defining a single glass sheet. In this case, an overlap between the primitives with the junctions between glass sheets 8 are for example prohibited by considering the intersection of the primitives with the junctions between glass sheets 8 as a prohibited constraint. This may be the case where primitives of various sizes are generated in compliance with guidelines for the distribution of these various types of primitives. Compliance with the guidelines is for example integrated into the objective function or considered to be an additional constraint.

In yet another embodiment, the optimization may be carried out for several acceptance criteria for allowing the defects. The types of defects and the acceptance of these defects for each type of primitive can then be taken into account by the program as parameters. The computation of Defect (i, j) is based on these parameters. For example, the value of Defect (i, j) is equal to 0 in the case of intersection with defects of acceptable type for the primitive considered. The acceptance criteria can be different for various pieces of glass and/or for various motherglasses.

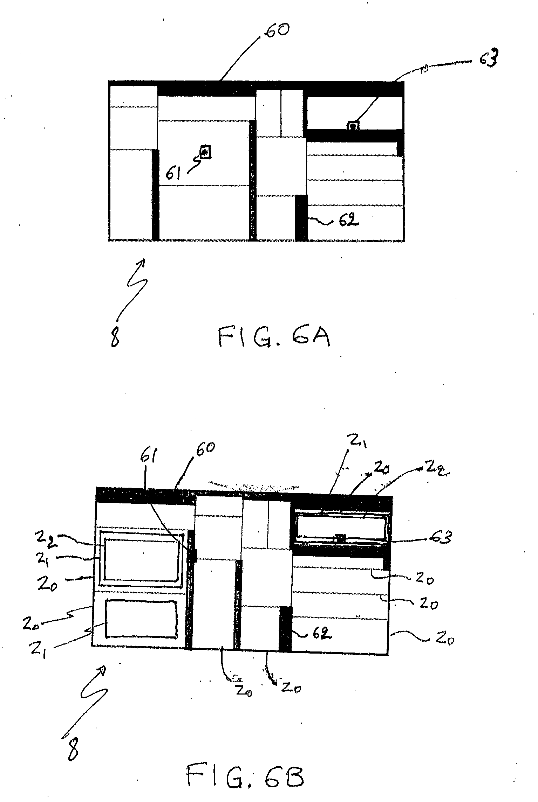

FIG. 6A illustrates an example of an optimum cutting layout in which the defects 61 and 63 may be considered acceptable for the pieces of glass, while the defects 60 and 62 may not be acceptable for any of the glass pieces to be cut. In an embodiment, the primitives are divided into various zones corresponding to different acceptance criteria of the defects. In this way, an optimum cutting layout can be provided as a function of different defects acceptance criteria for various zones of the pieces to be cut. By using this procedure, the process for cutting pieces of glass from a glass sheet of large dimensions or from a group of several glass sheets can be further optimized. Indeed, based on information relating to the defects (e.g., position, size, etc.), it is possible to discriminate between defects that have to be rejected or accepted according to the position of the defects within the area of the piece to be cut.

In an embodiment, the generation of an optimum cutting layout according to the above method is described in further detail in the following paragraphs. FIG. 6B depicts the various defects within acceptance zones (e.g., rectangles) that are positioned within each other (concentric) inside the glass piece or primitive to be cut. The positioning of each zone z1 and z2 within the primitive z0 can be defined by four parameters such as relative coordinates of the lower left corner of the respective zones z1 and z2 with respect to the lower left corner of the primitive z0, the length and the width of the respective zones z1 and z2. By using the four parameters, the coordinates (for zone z1) with abscissae $x_{i,z1,ini}$ and with ordinates $y_{i,z1,ini}$, the ordinate $y_{i,z1,end}$ of the upper left corner and the abscissa $x_{i,z1,end}$ of the lower right corner can be computed. Similarly, the coordinates (for zone z2) with abscissae $x_{i,z2,ini}$ and with ordinates $y_{i,z2,ini}$, the ordinate $y_{i,z2,end}$ of the upper left corner and the abscissa $x_{i,z2,end}$ of the lower right corner can also be computed. Although two zones 1 and z2 are shown within primitive z0, any number of zones can be used (i.e., one or more zones).

To determine whether a defect is located within at least one of the zones (e.g., z1, z2, etc), the "Defect" function described hereinabove may be adapted a follows. Acceptance criteria for allowing the defects for the various zones (e.g., z1, z2, etc.) can be defined as additional parameters of each zone. In addition, the defects may also be assigned parameters such as size or type (e.g., bubble, scratch, etc). In this way, the defects can be accepted differently in each zone according to the parameters. However, in the simplest case where each zone accepts either all the defects taken into account, or none, the above size and type parameters may not be needed.

For example, a DefectPosition function can be provided for zone z1, for example. DefectPosition(i,z1,j) is set equal to 1 in the case of intersection of the zone z1 rectangle with the defect j rectangle and set equal to 0 in the converse case by verifying at least one of four inequalities similar to the inequalities provided in the above paragraphs when discussing the intersection of the primitives. This function verifies the presence of the defect in the zone. If DefectPosition(i,z1,j) is equal to 1, it is determined whether the acceptance criteria for zone z1 are compatible with this defect. DefectZone(i,z1,j) = 0 is obtained in the case of compatibility, and DefectZone(i,z1,j) = 1 is obtained in the converse case. This procedure is implemented for each zone z1, z2,...inside the primitive z0.

The following equation can be obtained:

$$\text{Defect(i,j)} = 1 \text{ if } \sum_{z} DefectZone(i, z, j) \geq 1$$

$$\text{(i.e. DefectZone(i,z0,j)+ DefectZone(i,z1,j) + DefectZone(i,z2,j) + ... } \geq 1),$$

and

$$\text{Defect(i,j)} = 0 \text{ if } \sum_{z} DefectZone(i, z, j) = 0.$$

The program then proceeds in the same manner as described hereinabove for the computation of the objective function. To discriminate on the size or the type of defect, the computation can be for example implemented, in the case where DefectPosition(i,z1,j) = 1, of DefectType() and DefectSize() with for example: DefectType(i,z1,j) = 1 if the type is not accepted for zone z1 and 0 in the converse case, and DefectSize(i,z1,j) = 1 if the type is not accepted for zone z1 and 0 in the converse case.

Specifically, it is also possible to verify the size solely for the part of the defect inside the zone z1. If DefectType(i,z1,j) = 1 or DefectSize(i,z1,j) = 1 then DefectZone(i,z1,j) = 1, and DefectZone(i,z1,j) = 0 in the converse case.

The program thereafter proceeds in the same manner as described hereinabove for the computation of the objective function. Furthermore, as explained above, the various aspects of the invention can apply to numerous glass manufacturing processes.

As it can be appreciated, the process depicted in FIG. 1 may be generalized to manufacturing processes of any suitable type. The number of steps of defects analysis is not limited to the steps illustrated herein but encompass any number of steps as needed in various manufacturing settings.

By identifying the motherglasses or glass sheets 8 and by marking the defects with ink or laser, the identification of the sheets and the marking of the defects may be carried out independently or simultaneously. For example, the detection device may be provided along with one or more readers for identifying the motherglasses.

In an embodiment, the identifier 12 can be provided on a rim of the motherglasses or sheets 8. In this way, the identifier 12 on each or the glass sheets 8 can be read even when the glass sheets are stacked together.

In an embodiment, rather than identifying each motherglass or glass sheet 8 and having a database for storing the information about defects, the defects can be instead marked with an ink of a predetermined color, character or symbol on the defect itself or in the vicinity of the defect. The customer may then be able to identify the various types of defects, the size and the position of the defects and can generate information about defects which is useful to the program for optimizing the cutting layouts.

In an embodiment, optimization of the cutting or generation of the cutting layout is performed at the customer side or second manufacturer. However, as it can be appreciated the optimization of the cutting or generation of the cutting layout can be performed at the manufacturer of the motherglass (e.g., the first nmanufacturer). In this case, however, the first manufacturer should obtain pertinent information (e.g., size, shape, etc) regarding the glass pieces to be cut from for example the second manufacturer (i.e., the customer) or from the ultimate customer (e.g., the manufacturer of windshield for automobiles, or windowpanes for a building or a construction).

For example, by performing the cutting optimization at the motherglass manufacturer, cutting optimization can be performed on a larger number of motherglasses, for example, by grouping together motherglasses intended for various customers. In this way, instead of sending motherglasses to each customer according to the specification of each customer, the motherglasses can be cut and sent to each customer according to the optimization result.

In one embodiment, the cutting of a glass sheet is first performed vertically along the width of the glass sheet 8 and then horizontally along the length of the glass sheet 8. In another embodiment, the cutting is first performed horizontally along the length of the glass sheet 8 and then vertically along the width of the glass sheet 8. In yet another embodiment, the cutting can be performed in any direction as long as the optimized cutting layout is satisfied.

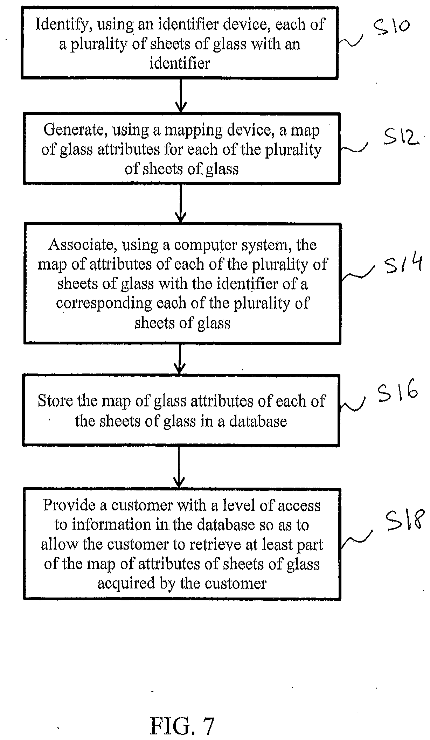

As it can be appreciated from the above paragraphs a method for identifying defects in glass is provided. FIG. 7 depicts a flow chart of the method, according to an embodiment of the present invention. The method includes identifying, using an identifier device, each of a plurality of sheets of glass with an identifier, at S10; and generating, using a mapping device, a map of glass attributes for each of the plurality of sheets of glass, at S12. The method further includes associating, using a computer system, the map of attributes of each of the plurality of sheets of glass with the identifier of a corresponding each of the plurality of sheets of glass, at S14; storing the map of glass attributes of each of the sheets of glass in a database, at S16; and providing a customer with a level of access to information in the database so as to allow the customer to retrieve at least part of the map of attributes of sheets of glass acquired by the customer, at S18.

In some embodiments, application programs for performing methods in accordance with embodiments of the invention can be embodied as program products in a computer(s) such as a personal computer or computer server or in a distributed computing environment comprising a plurality of computers. The computer(s) may include, for example, a desktop computer, a laptop computer, a handheld computing device such as a PDA, etc. The computer program products may include a computer readable medium or storage medium or media having instructions stored thereon used to program a computer to perform the methods described above. Examples of suitable storage medium or media include any type of disk including floppy disks, optical disks, DVDs, CD ROMs, magnetic optical disks, RAMs, EPROMs, EEPROMs, magnetic or optical cards, hard disk, flash card (e.g., a USB flash card), PCMCIA memory card, smart card, or other media. Alternatively, a portion or the whole computer program product can be downloaded from a remote computer system or computer server via a network such as the internet, an ATM network, a wide area network (WAN) or a local area network.

Stored on one or more of the computer readable media, the program may include software for controlling both the hardware of a general purpose or specialized computer or processor. The software also enables the computer or processor to interact with a user via output devices such as a graphical user interface, head mounted display (HMD), etc. The software may also include, but is not limited to, device drivers, operating systems and user applications.

Alternatively, instead or in addition to implementing the methods described above as computer program product(s) (e.g., as software application products) embodied in a computer, the method described above can be implemented as hardware in which for example an application specific integrated circuit (ASIC) can be designed to implement the method or methods of the present invention.

Although the various steps of the method(s) are described in the above paragraphs as occurring in a certain order, the present application is not bound by the order in which the various steps occur. In fact, in alternative embodiments, the various steps can be executed in an order different from the order described above.

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the spirit and scope of the appended claims. For example, it is to be understood that the present invention contemplates that, to the extent possible, one or more features of any embodiment can be combined with one or more features of any other embodiment.

Furthermore, since numerous modifications and changes will readily occur to those of skill in the art, it is not desired to limit the invention to the exact construction and operation described herein. Accordingly, all suitable modifications and equivalents should be considered as falling within the spirit and scope of the invention.

Further aspects of the present disclosure are disclosed in accordance with the following numbered clauses;

Clause 1: A method for identifying defects in glass, comprising:

identifying, using an identifier device, each of a plurality of sheets of glass with an identifier;
generating, using a mapping device, a map of glass attributes for each of the plurality of sheets of glass;
associating, using a computer system, the map of attributes of each of the plurality of sheets of glass with the identifier of a corresponding each of the plurality of sheets of glass;
storing the map of glass attributes of each of the sheets of glass in a database; and
providing a customer with a level of access to information in the database so as to allow the customer to retrieve at least part of the map of attributes of the sheets of glass acquired by the customer.

Clause 2: the method according to Clause 1, further comprising encrypting the database and providing the customer with a key to enable the customer to access data within the database according to the provided level of access while preventing the customer from performing statistical data processing of the stored map of attributes associated with the sheets of glass acquired by the customer.

Clause 3: the method according to Clause 1, wherein providing the customer with the level of access comprises filtering data within the database to provide the customer filtered data corresponding to the acquired sheets of glass and providing access to only a portion of the database containing the filtered data to the customer.

Clause 4: the method according to Clause 1 or Clause 3, further comprising encrypting the filtered data before providing access to the portion of the database containing the filtered data.

Clause 5: the method according to Clause 3, wherein the filtering comprises filtering the data within the database to provide the customer filtered data corresponding to the acquired sheets of glass according to a premium paid by the customer.

Clause 6: the method according to any of Clauses 1-5, further comprising setting a plurality of levels of access to information within the database according to the premium paid by the customer.

Clause 7: the method according to any of Clauses 1-6, wherein the attributes comprise thickness of a sheet of glass, type of glass, date of manufacture, time of manufacture, place of manufacture, or machine of manufacture, or any combination thereof

Clause 8: the method according to any of Clauses 1-8, wherein the identifier comprises a unique one dimensional barcode, a unique two-dimensional barcode, or a unique data matrix.

Clause 9: the method according to any of clauses 1-8, wherein identifying each of the plurality of sheets of glass comprises marking each of the sheets of glass with the identifier.

Clause 10: The method according to clause 9, wherein marking comprises marking using a laser.

Clause 11: The method according to any of clauses 1-10, wherein generating the map of attributes comprises scanning each of the plurality of sheets of glass using a scanner and recording a position and type of each of the defects in the database.

Clause 12: The method according to clause 11, wherein the map of glass attributes comprises a size of a defect, a position of a defect, a type of a defect, density of defects, or a severity criterion of a defect, or any combination thereof.

Clause 13: The method according to clause 12, wherein the severity criterion comprises a distance between adjacent defects being smaller than a set threshold.

Clause 14: The method according to clause 12, wherein the severity criterion comprises a position of a defect within a layer of glass within the sheet of glass or a layer of coating on the sheet of glass, or a combination thereof.

Clause 15: The method according to clause 12, wherein the severity criterion is a scale between 1 and 10 or a scale between 0 and 1.

Clause 16: The method according to clause 12, wherein an acceptable severity criterion threshold for sending a sheet of glass to the customer for processing is a size of a glass defect of approximately 5 millimeters with a density of approximately 0.6 per sheet or a size of a glass defect of approximately 3 millimeters with a density of approximately 1 per sheet.

Clause 17: The method according to any of clauses 1-16, further comprising applying a coating on each of the plurality of sheets of glass.

Clause 18: The method according to clause 17, further comprising scanning each of the plurality of sheets of glass and updating the map of glass attributes with information associated with the coating.

Clause 19: The method according to any of clauses 1-18, further comprising reading by a reader of the customer the identifier of a first sheet in the plurality of sheets and retrieving from the database a map of attributes of the first sheet and other sheets in the plurality of sheets.

Clause 20: The method according to any of clauses 1-19, further comprising arranging the plurality of sheets of glass as a stack of sheets of glass for transporting to a customer.

Clause 21: The method according to clause 20, further comprising recording in the database an order of each sheet within the stack.

Clause 22: A system for identifying defects in glass, comprising: an identifier device configured to identify each of a plurality of sheets of glass with an identifier, the plurality of sheets of glass to be processed by a customer;
a mapping device configured to generate a map of glass attributes for each of the plurality of sheets of glass;
a computer system configured to associate the map of attributes of each of the plurality of sheets of glass with the identifier of a corresponding each of the plurality of sheets of glass; and
a database configured to store the map of glass attributes of each of the sheets of glass,
wherein at least part of the database is accessible by the customer according to a predetermined level of access to information in the database so as to allow the customer to retrieve at least part of the map of attributes of the sheets of glass acquired by the customer.

Clause 23: The system according to clause 22, wherein the database is encrypted and access to data within the database according to the provided level of access is enabled with a key to prevent the customer from performing statistical data processing of the stored map of attributes associated with the sheets of glass acquired by the customer.

Clause 24: The system according to clause 22 or clause 23, wherein data within the database are filtered to provide the customer with filtered data corresponding to the acquired sheets of glass.

Clause 25: The system according to clause 24, wherein the filtered data are encrypted.

Clause 26: The system according to clause 24, wherein data within the database are filtered according to a premium paid by the customer.

Clause 27: The system according to any of clauses 22-26, wherein a plurality of levels of access to information within the database are set according to the premium paid by the customer.

Clause 28: The system according to any of clauses 22-27, wherein the map of glass attributes comprises a size of a defect, a position of a defect, a type of a defect, density of defects, or a severity criterion of a defect, or any combination thereof.

Clause 29: The system according to clause 28, wherein the severity criterion comprises a distance between adjacent defects being smaller than a set threshold.

Clause 30: The system according to clause 28, wherein the severity criterion comprises a position of a defect with within a layer of glass within the sheet of glass or a layer of coating on the sheet of glass, or a combination thereof

Clause 31: A method of generating a cutting layout for a glass sheet, comprising:

accessing, by a computer system associated with a second manufacturer, an amount of information in a database associated with a first manufacturer, the database having stored therein attributes of the glass sheet including a position of one or more defects within the glass sheet, wherein the amount of information accessed is set, by a computer system associated with the first manufacturer, according to a premium or fee paid by the second manufacturer to the first manufacturer; and

processing, by the computer system associated with the second manufacturer, the amount of information to provide an optimized cutting procedure for producing a desired cutting layout.

**Claims**

1. A method for generating a cutting layout for a glass sheet, comprising:

   detecting the presence of defects in sheets of glass by inspecting the sheets of glass or a glass ribbon before it is cut into said sheets of glass;

   identifying, using an identifier device, each of a plurality of sheets of glass (8) with an identifier (12);

   determining a severity criterion for each of said defects;

   generating, using a mapping device (6), a map of glass attributes for each of the plurality of sheets of glass (8), the attributes of a glass sheet comprising the position of the defects present in said glass sheet and the severity criterion of said defects;

   associating, using a computer system (21), the map of attributes of each of the plurality of sheets of glass (8) with the identifier (12) of a corresponding each of the plurality of sheets of glass;

   storing the map of glass attributes of each of the sheets of glass in a database (10); and

   providing a customer with a level of access to information in the database (10) so as to allow the customer to retrieve at least part of the map of attributes of the sheets of glass acquired by the customer, and

   generating, using a computer system, an optimized cutting layout for a glass sheet based on said at least part of the map of attributes.

2. The method according to claim 1, further comprising encrypting the database and providing the customer with a key to enable the customer to access data within the database according to the provided level of access while preventing the customer from performing statistical data processing of the stored map of attributes associated with the sheets of glass (8) acquired by the customer.

3. The method according to claim 1, wherein providing the customer with the level of access comprises filtering data within the database (10) to provide the customer filtered data corresponding to the acquired sheets of glass and providing access to only a portion of the database containing the filtered data to the customer.

4. The method according to claim 1 or claim 3, further comprising encrypting the filtered data before providing access to the portion of the database containing the filtered data.

5. The method according to any of claims 1-4, wherein the attributes comprise thickness of a sheet of glass, type of glass, date of manufacture, time of manufacture, place of manufacture, or machine of manufacture, or any combination thereof.

6. The method according to any of claims 1-5, wherein the identifier (12) comprises a unique one dimensional barcode, a unique two-dimensional barcode, or a unique data matrix.

7. The method according to any of claims 1-6, wherein identifying each of the plurality of sheets of glass (8) comprises marking each of the sheets of glass with the identifier (12).

8. The method according to claim 7, wherein marking comprises marking using a laser.

9. The method according to any of claims 1-8, wherein generating the map of attributes comprises scanning each of the plurality of sheets of glass (8) using a scanner (6) and recording a position and type of each of the defects in the database (10).

10. The method according to claim 9, wherein the map of glass attributes comprises a size of a defect, a position of a defect, a type of a defect, density of defects, or a severity criterion of a defect, or any combination thereof.

11. The method according to claim 10, wherein the severity criterion comprises a distance between adjacent defects being smaller than a set threshold.

12. The method according to claim 10, wherein the severity criterion comprises a position of a defect within a layer of glass within the sheet of glass (8) or a layer of coating on the sheet of glass, or a combination thereof

13. The method according to any of claims 1-12, further comprising applying a coating on each of the plurality of sheets of glass (8).

14. The method according to claim 13, further comprising scanning each of the plurality of sheets of glass and updating the map of glass attributes with information associated with the coating.

15. The method according to any of claims 1-14, further comprising reading by a reader of the customer the identifier (12) of a first sheet in the plurality of sheets and retrieving from the database (10) a map of attributes of the first sheet and other sheets in the plurality of sheets (8).

16. The method according to any of claims 1-15, further comprising arranging the plurality of sheets of glass (8) as a stack of sheets of glass (22) for transporting to a customer.

17. The method according to claim 16, further comprising recording in the database an order of each sheet (8) within the stack.

18. A system for generating a cutting layout for a glass sheet, comprising:

an identifier device configured to identify each of a plurality of sheets of glass (8) with an identifier (12), the plurality of sheets of glass to be processed by a customer;
a mapping device (6) configured to detect the presence of defects in the sheets of glass by inspecting the sheets of glass or a glass ribbon before it is cut into said sheets of glass and to generate a map of glass attributes for each of the plurality of sheets of glass (8), the attributes of a glass sheet comprising the position of the defects present in said glass sheet and a severity criterion for each of said defects;
a computer system (21) configured to associate the map of attributes of each of the plurality of sheets of glass (8) with the identifier (12) of a corresponding each of the plurality of sheets of glass;
a database (10) configured to store the map of glass attributes of each of the sheets of glass,
wherein at least part of the database (10) is accessible by the customer according to a predetermined level of access to information in the database so as to allow the customer to retrieve at least part of the map of attributes of the sheets of glass acquired by the customer, and
a computer system configured to generate an optimized cutting layout for a glass sheet based on said at least part of the map of attributes.

19. The system according to claim 18, wherein the database (10) is encrypted and access to data within the database according to the provided level of access is enabled with a key to prevent the customer from performing statistical data processing of the stored map of attributes associated with the sheets of glass (8) acquired by the customer.

20. The system according to claim 18 or claim 19, wherein data within the database are filtered to provide the customer with filtered data corresponding to the acquired sheets of glass (8).

21. The system according to any of claims 18-20, wherein the map of glass attributes comprises a size of a defect, a position of a defect, a type of a defect, density of defects, or a severity criterion of a defect, or any combination thereof.

Fig.1

EP 3 518 160 A1

FIG. 2

EP 3 518 160 A1

Fig.3

Fig.4

Fig.5

FIG. 6A

FIG. 6B

Identify, using an identifier device, each of a plurality of sheets of glass with an identifier — S10

Generate, using a mapping device, a map of glass attributes for each of the plurality of sheets of glass — S12

Associate, using a computer system, the map of attributes of each of the plurality of sheets of glass with the identifier of a corresponding each of the plurality of sheets of glass — S14

Store the map of glass attributes of each of the sheets of glass in a database — S16

Provide a customer with a level of access to information in the database so as to allow the customer to retrieve at least part of the map of attributes of sheets of glass acquired by the customer — S18

FIG. 7

Europäisches
Patentamt

European
Patent Office

Office européen
des brevets

# EUROPEAN SEARCH REPORT

**Application Number**

EP 19 15 8652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/120253 A1 (BENISCHKE PETER [DE] ET AL) 14 May 2009 (2009-05-14) * paragraphs [0007] - [0057]; figures * | 1-21 | INV. G06Q10/08 G06Q10/04 |
| X | WO 2010/043994 A1 (MIPEC AG [CH]; EHRISMANN RALPH [CH]) 22 April 2010 (2010-04-22) * paragraphs [0001] - [0012], [0016] - [0028]; figures * | 1-21 | |
| X | US 3 503 290 A (VALEMBOIS JEAN-ADOLPHE ET AL) 31 March 1970 (1970-03-31) * column 2, line 32 - column 23, line 4 * | 1-21 | |
| X | WO 2006/009223 A1 (ASAHI GLASS FINE TECHNO CO LTD [JP]; SETO SHIGEYUKI [JP]) 26 January 2006 (2006-01-26) * paragraphs [0007] - [0039] * | 1-21 | |
| X | US 2004/134231 A1 (OYA YOSHITAKA [JP]) 15 July 2004 (2004-07-15) * paragraphs [0009] - [0019], [0026] - [0052]; figures * | 1-21 | TECHNICAL FIELDS SEARCHED (IPC) G06Q |
| A | US 2012/037700 A1 (WALJI RIAZ [CA] ET AL) 16 February 2012 (2012-02-16) * paragraph [0013] - paragraph [0018] * | 1-21 | |
| A | FR 2 747 211 A1 (SAINT GOBAIN CINEMATIQUE [FR]) 10 October 1997 (1997-10-10) * the whole document * | 1-21 | |
| A | WO 2010/130226 A1 (SAINT GOBAIN [FR]; ZHENG YUAN [CN]; SCHWEITZER JEAN-PHILIPPE [CN]; LIN) 18 November 2010 (2010-11-18) * page 1 - page 6; figure 1 * | 1-21 | |

The present search report has been drawn up for all claims

| Place of search | Date of completion of the search | Examiner |
|---|---|---|
| Munich | 2 April 2019 | Aguilar, José María |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 8652

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2019

| Patent document cited in search report | Publication date | Patent family member(s) | Publication date |
|---|---|---|---|
| US 2009120253 A1 | 14-05-2009 | CN 1590327 A | 09-03-2005 |
| | | DE 10335247 A1 | 24-02-2005 |
| | | JP 4914565 B2 | 11-04-2012 |
| | | JP 2005053774 A | 03-03-2005 |
| | | KR 20050016094 A | 21-02-2005 |
| | | TW I344946 B | 11-07-2011 |
| | | US 2005023337 A1 | 03-02-2005 |
| | | US 2009095803 A1 | 16-04-2009 |
| | | US 2009120253 A1 | 14-05-2009 |
| WO 2010043994 A1 | 22-04-2010 | CH 699748 A2 | 30-04-2010 |
| | | WO 2010043994 A1 | 22-04-2010 |
| US 3503290 A | 31-03-1970 | BE 707162 A | 28-05-1968 |
| | | CA 922405 A | 06-03-1973 |
| | | DE 1627195 A1 | 10-12-1970 |
| | | GB 1212028 A | 11-11-1970 |
| | | LU 52594 A1 | 16-08-1968 |
| | | US 3503290 A | 31-03-1970 |
| WO 2006009223 A1 | 26-01-2006 | JP 2006039725 A | 09-02-2006 |
| | | TW 200606489 A | 16-02-2006 |
| | | WO 2006009223 A1 | 26-01-2006 |
| US 2004134231 A1 | 15-07-2004 | AU 2003220811 A1 | 27-10-2003 |
| | | CN 1643438 A | 20-07-2005 |
| | | DE 10392488 T5 | 17-02-2005 |
| | | JP 4347067 B2 | 21-10-2009 |
| | | JP WO2003087923 A1 | 25-08-2005 |
| | | KR 20040105764 A | 16-12-2004 |
| | | TW I311128 B | 21-06-2009 |
| | | US 2004134231 A1 | 15-07-2004 |
| | | WO 03087923 A1 | 23-10-2003 |
| US 2012037700 A1 | 16-02-2012 | CA 2748836 A1 | 12-02-2012 |
| | | US 2012037700 A1 | 16-02-2012 |
| FR 2747211 A1 | 10-10-1997 | AU 726641 B2 | 16-11-2000 |
| | | BR 9706589 A | 20-07-1999 |
| | | CA 2223263 A1 | 16-10-1997 |
| | | EP 0833700 A1 | 08-04-1998 |
| | | FR 2747211 A1 | 10-10-1997 |
| | | JP H11507138 A | 22-06-1999 |
| | | US 6028302 A | 22-02-2000 |
| | | WO 9737779 A1 | 16-10-1997 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 19 15 8652

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2019

| Patent document cited in search report | Publication date | Patent family member(s) | | Publication date |
|---|---|---|---|---|
| WO 2010130226 A1 | 18-11-2010 | CN | 101887030 A | 17-11-2010 |
| | | EP | 2430431 A1 | 21-03-2012 |
| | | JP | 5576477 B2 | 20-08-2014 |
| | | JP | 2012526968 A | 01-11-2012 |
| | | KR | 20120018319 A | 02-03-2012 |
| | | US | 2012044344 A1 | 23-02-2012 |
| | | WO | 2010130226 A1 | 18-11-2010 |

EPO FORM P0459

For more details about this annex : see Official Journal of the European Patent Office, No. 12/82

page 2 of 2